# EUROPEAN PATENT APPLICATION

(11) **EP 4 343 644 A1**
(43) Date of publication of application: **27.03.2024**
(21) Application number: 22196646.8
(22) Date of filing: 20.09.2022
(51) Int. Cl.: G06N 20/00

(54) **METHOD FOR TRAINING A MACHINE LEARNING MODEL IN A SERVER-CLIENT MACHINE LEARNING SCENARIO**

(71) Applicant: u-blox AG, 8800 Thalwil (CH)
(72) Inventor: Lenzarini, Davide, 8800 Thalwil (CH); Kröll, Harald, 8800 Thalwil (CH); Karlsson, Peter, 211 75 Malmö (SE)
(74) Representative: Epping - Hermann - Fischer

(57) **Abstract**

A method for training a machine learning (ML) model in a server-client ML scenario comprises determining by a ML service provider a set of rules for preparing input data, and preparing by a client input data according the received set of rules based on raw data from an associated terminal device, and training a ML model by the ML service provider based on the prepared input data provided by the client.

## Description

### TECHNICAL FIELD

This disclosure relates to a method for training a machine learning model in a server-client machine learning scenario. The disclosure further relates to a machine learning service provider and a client associated with a terminal device.

### BACKGROUND ART

In many machine learning applications, machine learning includes typical procedures such as collecting raw data, preparing input data for training based on the raw data, choosing a model to be trained, training the model based on the input data, evaluating and tuning the model, and performing inference using the model.

In many machine learning applications, data are collected by terminal devices, such as mobile terminals, sensors in Internet of Things (IoT), etc. Such terminal devices have constrained power and processing capabilities, and may only perform collecting raw data. Huge amount of workloads in the machine learning process can be performed by machine learning (ML) service providers. The terminal devices and the ML service providers interact with each other. The terminal devices provide raw data to the ML service providers, and the ML service providers prepare the data for training, choose a model, train and tune the model, and may provide the model to the terminal devices for inference application using the model.

In such conventional ML scenarios with the terminal devices and the ML service providers, the terminal devices need to carry out all interactions with the ML service provider, including the authentication for enrollment by the ML service providers and the communications during the ML procedures. Moreover, the terminal devices also need to transmit all raw data to the ML service providers. As the training and tuning for a ML model typically require large amount of data, transmitting all raw data to ML service providers consumes high bandwidth and transmission power.

Therefore, in such conventional ML scenario with the terminal devices and the ML service providers, the bandwidth and the transmission power of the terminal devices with constrained power and processing capabilities are not efficiently used.

### SUMMARY OF INVENTION

An object to be achieved is to provide an improved concept for training a ML model by securely and efficiently using ML service providers interacting with terminal devices.

This object is achieved with the subject-matter of the independent claims. Embodiments and developments derive from the dependent claims.

According to the present disclosure, a client is associated with a terminal device, and communicates with a ML service provider in a server-client scenario for training a ML model. The terminal device may host the client or the client may be hosted in a different device.

The improved concept for training a ML model is based on the idea that at least part of the data preparation for training a model from raw data is carried out at the client. The ML service provider determines and provides rules for data preparation to the client. The client obtains raw data from the terminal device (as a data generator or a data collector for other devices) and performs data preparation according to the rules. The amount of the prepared data is typically significantly reduced compared with the raw data. The client provides the prepared data to the ML service provider for training a ML model.

By using the client and transmitting only the prepared data to the ML service provider, the bandwidth and transmission power are efficiently used compared with transmitting raw data to the ML service provider by the terminal device.

According to the present disclosure, the method for training a ML model in a server-client scenario comprises that the ML service provider determines a set of rules for preparing input data for training the ML model. The ML service provider provides the set of rules to the client. The client prepares input data for the ML service provider based on raw data from the terminal device, and provides the prepared input data to the ML service provider. The ML service provider trains the ML model based on the prepared input data.

In an example implementation, the training of the ML model evolves during the training process. The ML service provider updates the set of rules for preparing input data based on the evolution of the training and provides the updated set of rules to the client. For example, the ML service provider updates the set of rules with an objective function which finds the optimum between the transmission bandwidth and power for sending the input data prepared according to the rules and the performance of the ML training. The client prepares the input data according to the updated rules and provides the prepared input data accordingly to the ML service provider. The ML service provider trains the ML model based on the prepared input data accordingly and an updated version of the trained ML model is obtained. Hence, the amount of prepared input data can be further reduced with updating the rules for preparing input data due to the evolution of the training of the ML model. The transmission bandwidth and power are reduced due to the reduced amount of transmitted data. In such example implementation, the evolution of the training continues and the ML service provider may iteratively update the set of rules for preparing input data based on the continuous evolution of the training.

In an example implementation, after the trained ML model or the updated version of the trained ML model is obtained by the ML service provider, the ML service provider may provide the trained ML model to the client or to a further device, for example, a cloud application server which utilizes the ML model.

In some example implementations, when the trained ML model is provided to the client, the client provides the trained ML model to the terminal device for the terminal device to perform inference application. Alternatively, the client may perform inference application of the trained ML model on further received raw data from the terminal device. The client provides output of the inference application to the terminal device. Hence, the inference application is offloaded to the client, which further reduces the processing load of the terminal device.

In some example implementations, the further received raw data can be used for inference application of the trained ML model, and also used for preparing the input data for the ML service provider for further training the ML model.

In an example implementation, the client accesses the ML service provider with an identity recognized by the ML service provider. For example, the identity is specific for the client and stored in the client. As another example, the identity is obtained by the client from the terminal device. As yet another example, the identity is obtained by the client from a first identity material stored in the client itself (for instance defined by the manufacturer) and a second identity material obtained from the terminal device (for instance defined by the user). The identity enables the client to be enrolled by the ML service provider.

In a further example implementation, the ML service provider performs secure authentication based on the identity provided from the client. The secure authentication ensures the security and reliability that the data and the trained ML model are protected for both the client and the ML service provider.

In some example implementations, the set of rules for preparing input data includes at least one of several data processing rules, such as missing data management, data formatting, filtering, normalization, discretization, transformation, scaling, augmentation, anonymization, labelling. For example, raw data can be labelled for supervised ML learning. Preparing input data according to such rules ensures the usability, reliability and efficiency of using the input data for ML training.

In some example implementations, raw data are collected by the terminal device from an external device. For example, raw data are collected by the terminal device from a sensor externally connected with the terminal device. The raw data collected from the sensor is provided to the client by the terminal device.

The present disclosure further provides a module for ML operations according to the improved concept for training a ML model in a server-client scenario. For example, the module comprises a processing unit and a communication unit and is associated with a terminal device. For performing the respective actions in a method for training a ML model in a server-client scenario, the communication unit of the module is configured to receive from a ML service provider a set of rules for preparing input data for training the ML model; the processing unit of the module is configured to prepare input data according to the set of rules based on raw data from the terminal device, and provides the prepared input data to the ML service provider.

For example, the module for ML operations can be a connectivity module enhanced with functionalities of a client for training a ML model in a server-client scenario. The enhanced connectivity module may be separated from the terminal device or may be integrated into the terminal device or may be integrated with a component of the terminal device like a microcontroller unit, MCU.

In some implementations the communication unit of the module is further configured to receive from the ML service provider an updated set of rules based on an evolution of the training of the ML model, provide to the ML service provider input data prepared by the processing unit of the module according to the updated set of rules.

In some implementations, the communication unit of the module is further configured to receive from the ML service provider the trained ML model and/or the updated version of the trained ML model.

In a further implementation, the processing unit of the module is configured to perform inference application of the trained ML model on further raw data from the terminal device, and provide output of the inference application to the terminal device.

In some implementations the processing unit of the module is further configured to provide the trained ML model to the terminal device.

In some implementations the communication unit of the module includes at least one of several communication modules, such as a WiFi module, a Bluetooth module, a Thread module or a 3GPP-compliant mobile communication module (able to communicate with mobile networks using different releases of 2G, 3G, 4G, 5G and so on). This communication unit allows the module to interact with the ML service provider for example via Internet or via Intranet.

Further implementations of the module for ML operations become readily apparent from the various implementations described above in conjunction with the method.

The present disclosure further provides a computing apparatus according to the improved concept for training a ML model in a server-client scenario. For example, the computing apparatus comprises a processing unit and a communication unit. The processing unit of the computing apparatus is configured to determine a set of rules for preparing input data for training the ML model, and train the ML model based the prepared input data according the set of rules from a client associated with a terminal device; the communication unit of the computing apparatus is configured to provide the set of rules to the client and receive the prepared input data from the client.

In some implementations the communication unit of the computing apparatus is further configured to provide to the client an updated set of rules based on an evolution of the training of the ML model and receive input data prepared according the updated set of rules from the client; the processing unit of the computing apparatus is accordingly configured to train the ML model based on the input data prepared according the updated set of rules and obtain an updated version of the trained ML model.

In a further implementation, the communication unit of the computing apparatus is configured to provide the trained ML model to the client or to a further device, for example, a cloud application server.

Further implementations of the computing apparatus become readily apparent from the various implementations described above in conjunction with the method.

A system according to the improved concept may comprise a module for ML operations configured according to one of the above implementations and a computing apparatus configured according to one of the above implementations.

Further implementations and developments in the system become readily apparent for the skilled reader from the various implementations described above in conjunction with the method and the computing apparatus for training a ML model in a server-client scenario.

According to one embodiment of the improved concept, a computer program comprises instructions that may be stored in a preferably non-transitory computer-readable storage medium, when the instructions are executed on two or more processors of at least a computing device and a computing apparatus, the instructions enabling the two or more processors to execute a method according to one of the implementations described above.

### BRIEF DESCRIPTION OF DRAWINGS

The improved concept will be explained in more detail in the following with the aid of the drawings. Elements and functional blocks having the same or similar function bear the same reference numerals throughout the drawings. Hence their description is not necessarily repeated in the following drawings.

In the drawings:
- Figure 1: shows a flowchart of a method for training a ML model in a server-client scenario;
- Figure 2: shows a flowchart of an example implementation of the method;
- Figure 3: shows an example implementation of a module for machine learning operations;
- Figure 4: shows an example implementation of a terminal device;
- Figure 5: shows an example implementation of a computing apparatus;
- Figure 6: shows an example implementation of a system;
- Figure 7: shows an example implementation of a system; and
- Figure 8: shows an example illustration of closed loop operations in a system.

### DETAILED DESCRIPTION

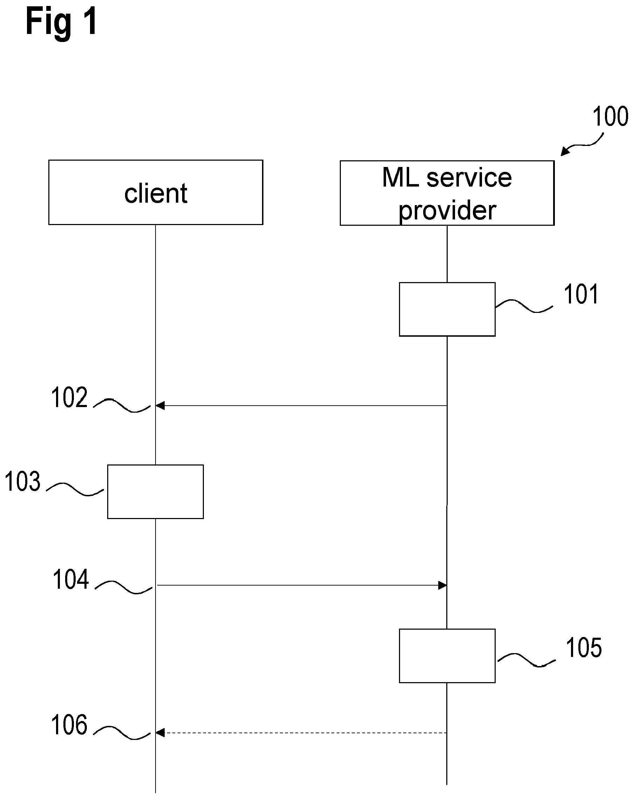

Figure 1 shows a flow diagram of a method 100 for training a ML model in a server-client scenario.

In a server-client scenario for training a ML model, a client is associated with a terminal device and communicates with a ML service provider that provides ML model training services.

The terminal device may be a mobile terminal that has various raw data sources. For example, the mobile terminal may generate data or collect data from measurements performed by applications in the mobile terminal, measurements performed by embedded sensors in the mobile terminal, or information from the Internet accessed by the mobile terminal. The terminal device may be a sensor device that can collect data by a sensor. The terminal device may be connected with a further external device for collecting raw data. The external device may be a sensor.

The ML service provider may be a computer deployed with ML functionalities, a server deployed with ML functionalities, or cloud service provider deployed with ML functionalities.

The client associated with the terminal device is specifically connected with the terminal device. It interacts with the ML service provider for the terminal device. In the method 100, the client and the ML service provider interact with each other for training a ML model. To access the ML service provider and use its services, the client provides an identity when accessing the ML service provider. The identity may be specific for the client and stored in the client, for example, a manufacture provides an identity to the client. The identity may be specific for the associated terminal device and provided to the client, for example, a user provides an identity to the associated terminal. The client uses the identity of the terminal device to access the ML service provider. Upon being required for providing services, the ML service provider may perform secure authentication based on the identity provided from the client. With a secure authentication, security and reliability of using the data and the trained ML model can be enforced for the client and the ML service provider. Furthermore, with a secure authentication the client may be automatically enrolled on the ML service provider, a zero touch provisioning, ZTP is allowed without manual interactions for starting using ML services.

In step 101, the ML service provider determines a set of rules for preparing input data. For training a ML model, raw data collected from a terminal device is typically not proper to be used directly. For example, raw data may have various formats, dimensions, outliers, invalid values, etc. Certain preprocessing of raw data is required so that the data is organized, cleaned, integrated and formatted efficiently and thus can be used as input data for running the training for a ML model. To prepare input data from raw data, a set of rules may include one or more of data processing rules such as missing data management, data formatting, filtering, normalization, discretization, quantization, transformation, scaling, augmentation, anonymization, and labelling for supervised training. The set of rules is not limited to the exemplified rules. Any rules that the ML service provider requires the client to process on the raw data can be counted as a rule for preparing input data.

In step 102, the client receives the set of rules for preparing input data for the ML service provider.

In step 103, the client prepares input data according to the set of rules based on raw data from the terminal device. The client obtains raw data from the terminal device. The raw data may be any measurements or information collected by the terminal device. The raw data is processed by the client according to the set of rules, for example, to be formatted, filtered, normalized, and so on. The processed data is used as input data for the ML service provider for training the ML model.

In step 104, the client provides the prepared input data to the ML service provider.

In step 105, the ML service provider trains the ML model based on the prepared input data. The training may be supervised, unsupervised, reinforcement or hybrid machine learning. The ML model to be trained depends on the application of the ML model. For example, a ML model to be trained is for classification, regression, anomaly detection, identifying relations, providing recommendations, clustering, building decision trees, autonomous driving, robotics manipulation, etc. The parameters and compositions of the ML model can be trained based on the prepared input data.

In some implementations, after step 105, the ML service provider may perform step 106 to provide the trained ML model to the client. In addition or alternatively, the ML service provider may provide the trained ML model to a further device. A further device may be a further server, a cloud application server, or a further terminal device which utilizes the ML model for their own purposes.

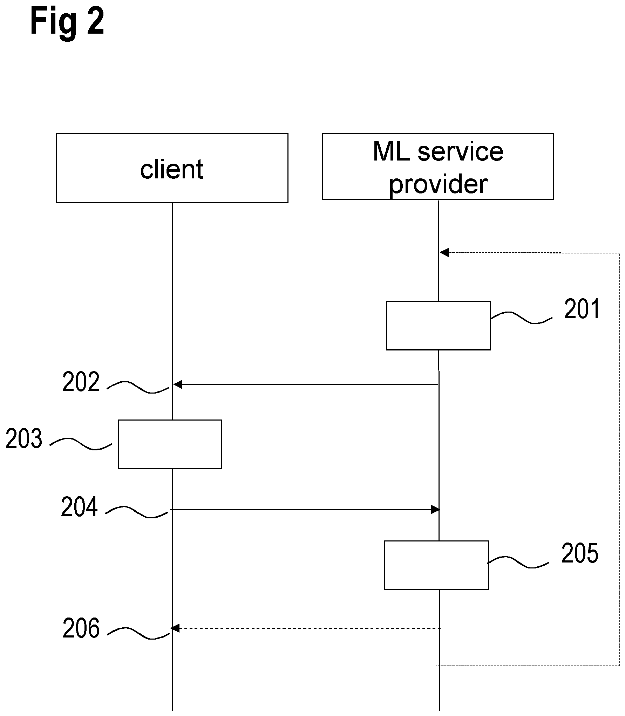

Figure 2 shows a flowchart of an example implementation of the method 100. In addition to the procedures in the method 100, the client and the ML service provider may perform further interactions.

In step 201, the ML service provider updates the set of rules based on an evolution of the training of the ML model. During the process of training the ML model, the ML model may be developed and evolved into a next phase, for example for finer tuning of parameters. The input data may have different requirements accordingly. For example, different or new rules may appear for filtering or scaling or discretization, etc., meanwhile, previously determined rules may not be required any more. An updated set of rules is determined by the ML service provider. Furthermore, the ML model may consider an optimization of transmission characteristics between the ML service provider and the client when updating the set of rules. For example, the ML service provider updates the set of rules with an objective function which finds the optimum between the transmission bandwidth and power for sending the input data prepared according to the rules and the performance of the ML training. In step 202, the updated set of rules are provided to the client.

In step 203, upon receiving the updated set of rules, the client prepares input data based on the raw data according to the updated set of rules. In step 204, the client provides the input data to the ML service provider. In some examples, the amount of data prepared according to the updated rules may be further reduced. The bandwidth and power for transmitting such data compared with previously prepared data may be reduced. The efficiency of using transmission bandwidth and power is further improved. In step 205, the training of the ML model is based on the prepared input data after the set of rules is updated. The trained ML model after the set of rules being updated is an updated version of the ML model.

In some implementations, after step 205, the ML service provide may perform step 206 to provide the updated version of the trained ML model to the client. In addition or alternatively, the ML service provide may provide the updated version of the trained ML model to a further device.

Steps 201 to 205 or steps 201 to 206 in some implementations of the example implementation of the method 100 can be performed iteratively. Upon the training of the ML model evolves into a next phase and an update of the set of rules is required, steps 201 to 205 or steps 201 to 206 in some implementations can be performed accordingly.

When the trained ML model is provided to the client, the client may provide the trained ML model to the terminal device. The terminal device performs inference application based on the trained ML model using further collected raw data. Alternatively, the client may perform inference application of the trained ML model on further raw data from the terminal device. The inference application depends on the ML model. Outputs are obtained by the inference application. For example, outputs may be values, decisions, alerts, recommendations, etc. The client provides the outputs of the inference application to the terminal device. Hence, the terminal device can obtain output directly without performing the inference application and thus reduce its processing load.

In yet another implementation of the method 100, when the trained ML model is provided the client, the client may store the trained ML model, and provide the stored ML Model to the terminal device on demand. The terminal device performs inference application based on the trained ML model using further collected raw data.

In some implementations, the further raw data collected by the terminal device can be used for inference application by the terminal device, or provided to the client to perform inference application by the client. Meanwhile, the further raw data can be provided to the client for preparing input data for a following ML model training iteration.

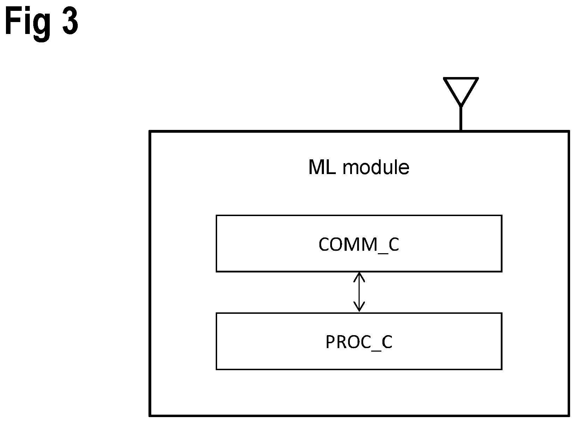

Figure 3 shows an example implementation of a module for machine learning operations, ML module. The module is an electronic arrangement that comprises a processing unit PROC_C and a communication unit COMM C. The module is configurable to perform functionalities for machine learning operations by PROC_C. The module is configurable to communicate with external computers or remote servers by COMM C. COMM C may comprise one or more of an Ethernet module, a WiFi module, a Bluetooth module, a Thread module, a 3GPP-compliant mobile communication module. The module may be integrated with an electronic device without communication functionality. In such an example, the module provides machine learning operations and the communication functionalities for the electronic device.

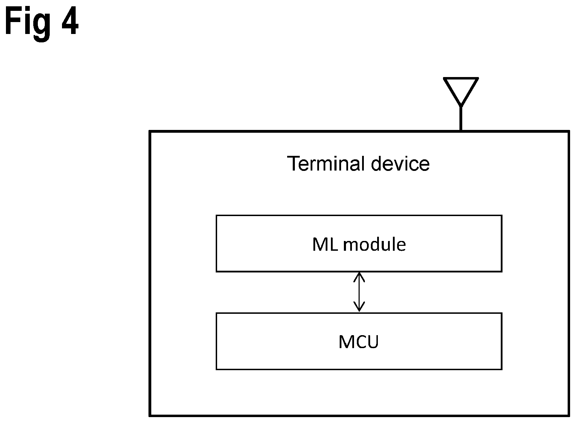

Figure 4 shows an example implementation of a terminal device. The module, ML module, may be integrated in a terminal device, such as a wireless terminal, a mobile terminal, or a computer. In such examples, the terminal device is the host of the module. The module is able to communicate with the host microcontroller unit (MCU) of the terminal device via the integration.

Referring back to Figure 3, for training a ML model in a server-client scenario, the module, ML module, is configured to communication with a ML service provider and performs machine learning operations for training a ML model. The module is associated with a terminal device. The terminal device may be the host of the module, or externally connected with the module when the module is, for example, integrated with another electronic device.

COMM_C is configured to receive from the ML service provider a set of rules for preparing input data for the ML service provider to train the ML model. PROC_C is configured to prepare input data according to the set of rules based on raw data from a terminal device. COMM C is configured to provide the prepared input data to the ML service provider.

In some implementations, the module may be further configured to iteratively perform machine learning operations due to an evolution of the training of the ML model. COMM_C may be further configured to receive from the ML service provider an updated set of rules based on the evolution of the training. PROC_C may be further configured to prepare input data according to the updated set of rules. COMM_C may be further configured to provide the prepared input data to the ML service provider.

In some implementations, the module may be further configured to receive the trained ML model from the ML service provider by COMM_C.

After the trained ML model is received by COMM_C, the module may be configured to provide the ML model to the terminal device by PROC_C. In addition or alternatively, the module may be further configured to perform inference applications. For example, after receiving the trained ML model by COMM_C, PROC_C may be configured to perform inference application of the trained ML model on further raw data from the terminal device obtained by PROC_C. PROC_C may be configured to provide output of the inference application to the terminal device.

In some implementations, after receiving the trained ML model, PROC_C is configured to store the trained ML module, and provide the stored ML model to the terminal device on demand.

Further implementations of the module become readily apparent from the various implementations described above in conjunction with the method 100.

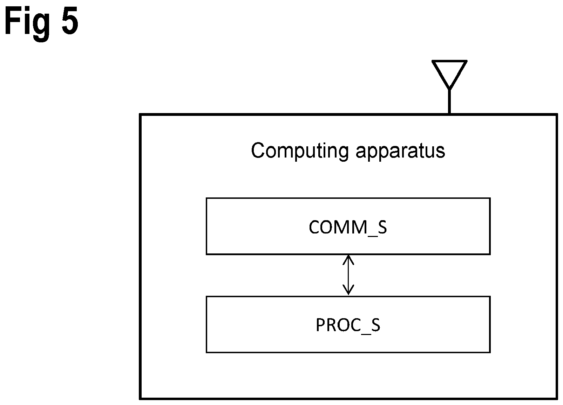

Figure 5 shows an example implementation of a computing apparatus. The computing apparatus may be a computer, a computing machine deployed as a server, a computing machine deployed as a cloud server. The computing apparatus comprises a processing unit PROC_S and a communication unit COMM_S. The computing apparatus is configurable to provide services for machine learning.

For training a ML model in a server-client scenario, the computing apparatus is configured to communicate with a client associated with a terminal device for training a ML model.

In such an implementation, PROC_S is configured to determine a set of rules for preparing input data for training the ML model. COMM_S is configured to provide the set of rules to the client, and receive input data prepared according to the set of rules from the client. PROC_S is configured to train the ML model based on the prepared input data.

In some implementations, the computing apparatus may be further configured to iteratively perform machine learning operations due to an evolution of the training of the ML model. In the process of the training of the ML model, PROC_S may be configured to update the set of rules for preparing input data due to the evolution of the training. COMM_S may be configured to provide the updated set of rules to the client. PROC_S may be configured to train an updated version the ML model based on the input data received by COMM_S from the client prepared according to the updated rules.

In a further implementation, COMM_S of the computing apparatus may be further configured to provide the trained ML model to the client, in addition or alternatively, to a further device.

Further implementations of the computing apparatus become readily apparent from the various implementations described above in conjunction with the method 100.

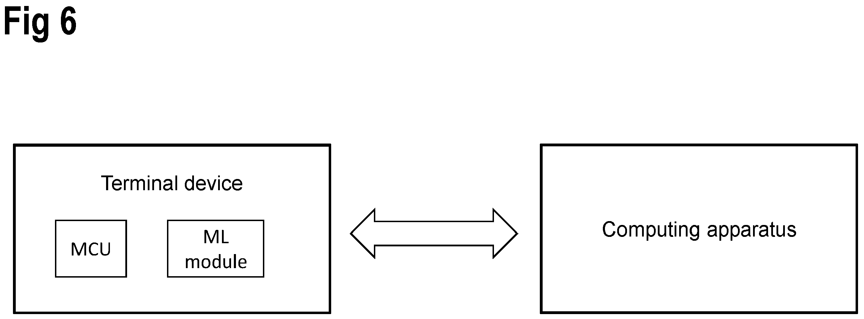

Figure 6 shows an example implementation of a system. The system may comprise a module for machine learning operations (ML module) integrated with a host MCU in a terminal device, and a computing apparatus. The system may be configured to carry out the method 100 for training a ML model in a server-client scenario. The module and the computing apparatus may be in communication with each other in one or more of several example networks, such as Internet, Intranet, private network, virtual private network. Implementations of the system become readily apparent from the various implementations described above in conjunction with the module for machine learning operations and the computing apparatus.

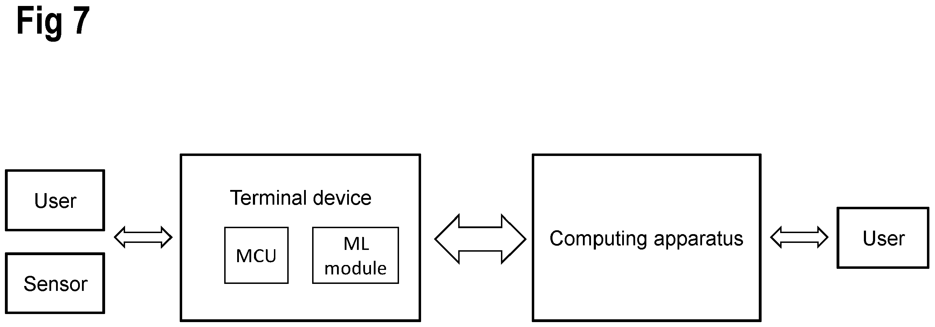

Figure 7 shows another example implementation of a system. The system may be configured to carry out the method 100 for training a ML model in a server-client scenario. The system may comprise a module for machine learning operations (ML module) integrated with a host MCU in a terminal device, and a computing apparatus. The system may further comprise a sensor externally connected with the terminal device. The terminal device may be configured to collect raw data from the sensor and provide to ML module. The system may further comprise one or more users. A user may operate the computing apparatus for training a ML model. A user may operate the terminal device for providing identity information for accessing a ML servicer provider. A user may operate the ML module through the terminal device for inference applications or providing identity information for accessing a ML servicer provider.

Implementations of the system become readily apparent from the various implementations described above in conjunction with the module for machine learning operations and the computing apparatus.

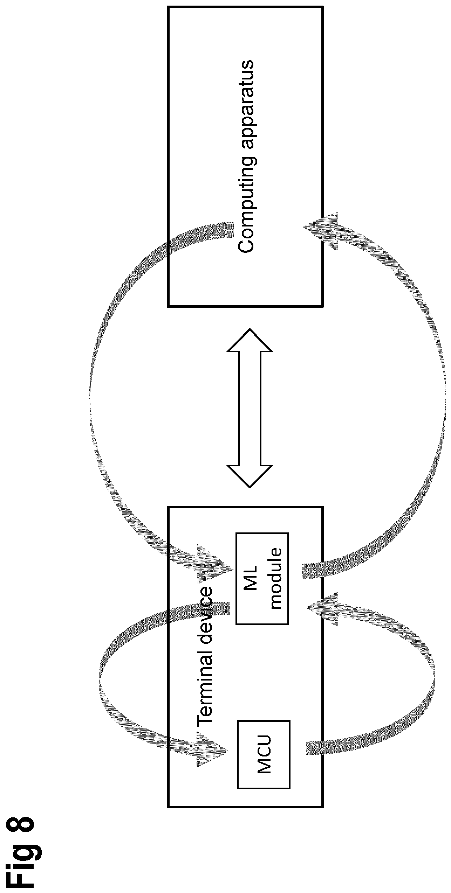

Figure 8 shows an example illustration of closed loop operations in a system. The system may be configured to carry out the method 100 for training a ML model in a server-client scenario, and can be any one of the foregoing described example implementations. The system may comprise a module for machine learning operations (ML module) integrated with a host MCU in a terminal device, and a computing apparatus. The closed loop operations among system components are illustrated. The machine learning operations form a closed loop between the host MCU and ML module configured as a client (the MCU provides raw data to the ML module and the ML module provides an updated ML model to the MCU). The machine learning operations form another closed loop between ML module configured as a client and the computing apparatus configured as a ML service provider (the ML module provides the prepared input data to the ML service provider and the ML service provider provides an updated ML model to the MCU). The host MCU and the ML service provider do not perform direct interactions. The closed loop operations ensure secure and reliable interactions for training a ML model, and improve efficiency of using transmission bandwidth and power.

Hence, with the various implementations described above for the improved concept for training a ML model, input data is prepared by a client based on a set of rules and transmitted to a ML service provider, instead of transmitting raw data to a ML service provider. The amount of transmitted data can be reduced. The amount of prepared input data can be further reduced with iteratively updating the rules for preparing input data due to evolutions of the training of the ML model. The transmission bandwidth and power are reduced due to the reduced amount of transmitted data. The closed loop operations between the client and a host terminal MCU and between the client and the ML service provider ensure a secure and reliable interactions for training the ML model.

Various embodiments of the improved concept for training a ML model can be implemented in the form of logic in software or hardware or a combination of both. The logic may be stored in a computer readable or machine-readable storage medium as a set of instructions adapted to direct one or more processors of a (distributed) computer system to perform a set of steps disclosed in embodiments of the improved concept. The logic may form part of a computer program product adapted to direct an information-processing device to automatically perform a set of steps disclosed in embodiments of the improved concept.

The specification and drawings are, accordingly, to be regarded in an illustrative rather than a restrictive sense. However, it will be evident that various modifications and changes may be made thereunto without departing from the scope of the invention as set forth in the claims.

### LIST OF REFERENCE SIGNS

- 100: method
- 101-106, 201-202: steps
- ML module: module for machine learning operations
- COMM_C, COMM_S: communication unit
- PROC_C, PROC_S: processing unit

## Claims

1. A method for training a machine learning, ML, model, in a server-client ML scenario comprising a ML service provider and a client associated with a terminal device, the method comprising:
- determining, by the ML service provider, a set of rules for preparing input data;
- receiving, by the client, from the ML service provider the set of rules for preparing input data for the ML service provider;
- preparing, by the client, based on raw data from the terminal device, input data for the ML service provider according to the set of rules;
- providing, by the client, the prepared input data to the ML service provider; and
- training, by the ML service provider, the ML model based on the prepared input data.

2. The method according to claim 1, further comprising
- updating, by the ML service provider, the set of rules based on an evolution of the training of the ML model;
- providing, by the ML service provider, the updated set of rules to the client; and
- training, by the ML service provider, an updated version of the trained ML model based on input data prepared according to the updated set of rules.

3. The method according to any one of claims 1 to 2, further comprising
- providing, by the ML service provider, the trained ML model to the client; and/or
- providing, by the ML service provider, the trained ML model to a further device.

4. The method according to claim 3, further comprising, after providing the trained ML model to the client
- providing, by the client, the received trained ML model to the terminal device; or
- performing, by the client, inference application of the trained ML model on further raw data from the terminal device; and providing, by the client, output of the inference application to the terminal device.

5. The method according to any one of claims 1 to 4, wherein the client accesses the ML service provider with an identity stored in the client or obtained from the terminal device; and the ML service provider performs secure authentication based on the identity provided from the client.

6. The method according to any one of claims 1 to 5, wherein the set of rules for preparing input data includes at least one of: missing data management, data formatting, filtering, normalization, discretization, transformation, scaling, augmentation, anonymization, labelling.

7. The method according to any one of claims 1 to 6, wherein the raw data are collected by the terminal device from an external device.

8. A module for machine learning, ML, operations, the module being configured to
- receive from a machine learning, ML, service provider a set of rules for preparing input data for the ML service provider;
- prepare, based on raw data from a terminal device, input data for the ML service provider according to the set of rules; and
- provide the prepared input data to the ML service provider.

9. The module according to claim 8, further configured to
- receive from the ML service provider an updated set of rules based on an evolution of the training of the ML model; and
- provide the input data prepared according to the updated set of rules to the ML service provider for training an updated version of the trained ML model.

10. The module according to any one of claims 8 to 9, further configured to
- receive from the ML service provider the trained ML model.

11. The module according to claim 10, further configured to
- provide the trained ML model to the terminal device; and/or
- perform inference application of the trained ML model on further raw data from the terminal device; and provide output of the inference application to the terminal device.

12. The module according to any one of claims 8 to 11, wherein the module comprises a communication unit that includes at least one of a WiFi module, a Bluetooth module, or a 3GPP-compliant mobile communication module.

13. A computing apparatus, comprising a processing unit and a communication unit, configured to
- determine a set of rules for preparing input data for training a machine learning, ML, model;
- provide, to a client associated with a terminal device, the set of rules;
- receive, from the client, input data prepared according to the set of rules; and
- train the ML model based on the prepared input data.

14. The computing apparatus according to claim 13, further configured to
- provide to the client an updated set of rules based on an evolution of the training of the ML model; and
- train an updated version of the trained ML model based on input data prepared according to the updated set of rules.

15. The computing apparatus according to any one of claims 13 to 14, further configured to provide the trained ML model to the client and/or to a further device.

16. A system comprising a module according to any one of claims 8 to 12 and a computing apparatus according to any one of claims 13 to 15.

17. A computer program comprising instructions which, when executed on two or more processors of at least a computing device and a computing apparatus, cause the two or more processors to perform the method according to any of claims 1 to 7.
